(19) **Europäisches Patentamt / European Patent Office / Office européen des brevets**

(11) **EP 3 711 135 B1**

(12) **FASCICULE DE BREVET EUROPEEN**

(45) Date de publication et mention de la délivrance du brevet:
**11.12.2024 Bulletin 2024/50**

(21) Numéro de dépôt: **18827162.1**

(22) Date de dépôt: **16.11.2018**

(51) Classification Internationale des Brevets (IPC):
**H02J 3/36** *(2006.01)*

(52) Classification Coopérative des Brevets (CPC):
**H02J 3/36;** Y02E 60/60

(86) Numéro de dépôt international:
**PCT/FR2018/052874**

(87) Numéro de publication internationale:
**WO 2019/097183 (23.05.2019 Gazette 2019/21)**

(54) **DISPOSITIF DE CONTRÔLE D'UN TERMINAL POUR LA COMPENSATION D'UNE PERTURBATION EN TENSION**

**VORRICHTUNG ZUR STEUERUNG EINES ENDGERÄTES ZUR KOMPENSATION EINER SPANNUNGSSTÖRUNG**

**DEVICE FOR CONTROLLING A TERMINAL FOR THE COMPENSATION OF A VOLTAGE DISTURBANCE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.11.2017 FR 1760889**

(43) Date de publication de la demande:
**23.09.2020 Bulletin 2020/39**

(73) Titulaires:
• **Supergrid Institute**
  **69100 Villeurbanne (FR)**
• **CentraleSupélec**
  **91190 - Gif-sur-Yvette (FR)**

(72) Inventeurs:
• **SHINODA, Kosei**
  **69001 Lyon (FR)**
• **DAI, Jing**
  **91190 Gif-Sur-Yvette (FR)**
• **BENCHAIB, Abdelkrim**
  **78180 Montigny Le Bretonneux (FR)**
• **GUILLAUD, Xavier**
  **59830 Bachy (FR)**
• **LUSCAN, Bruno**
  **69003 Lyon (FR)**

(74) Mandataire: **Cabinet Beau de Loménie**
  **Immeuble Eurocentre**
  **179 Boulevard de Turin**
  **59777 Lille (FR)**

(56) Documents cités:
WO-A1-2012/000548    CN-A- 104 821 595
CN-A- 105 281 356    CN-A- 105 281 356
CN-A- 106 099 899    GB-A- 2 537 684
US-A1- 2013 285 460    US-A1- 2017 346 288

• **TEMESGEN HAILESELASSIE, KJETIL UHLEN & TORE UNDELAND: "Control of Multiterminal HVDC Transmission for Offshore Wind Energy", NORDIC WIND POWER CONFERENCE, 10 September 2009 (2009-09-10) - 11 September 2009 (2009-09-11), pages 1 - 7, XP002783305**
• **L. XU ET AL: "DC voltage control and power dispatch of a multi-terminal HVDC system for integrating large offshore wind farms", IET RENEWABLE POWER GENERATION, vol. 5, no. 3, 3 May 2011 (2011-05-03), Michael Faraday House, Six Hills Way, Stevenage, Herts. SG1 2AY, UK, pages 223 - 233, XP055494734, ISSN: 1752-1416, DOI: 10.1049/iet-rpg.2010.0118**

- LI WENTING ET AL: "A novel control strategy for AC fault ride through in a MTDC system with offshore wind farms", 2014 INTERNATIONAL POWER ELECTRONICS AND APPLICATION CONFERENCE AND EXPOSITION, IEEE, 5 November 2014 (2014-11-05), pages 6pp, XP032734710, DOI: 10.1109/PEAC.2014.7037828

**Description**

Arrière-plan de l'invention

La présente invention concerne le domaine technique des installations de transport de courant continu haute tension multi-terminaux (HVDC) et plus particulièrement un dispositif de contrôle d'un terminal d'une telle installation.

De telles installations HVDC permettent le transport d'électricité sur de longues distances au moyen de lignes à courant continu de plusieurs centaines de kilomètres, ces lignes à courant continu formant une partie continue desdites installations. Ces installations permettent donc de transporter un courant continu, plutôt qu'un courant alternatif comme tel est le cas dans les installations traditionnelles. Elles sont particulièrement utilisées pour le transport électrique depuis ou jusqu'à des parcs éoliens offshore.

Les terminaux de ces installations permettent généralement de convertir une tension alternative en une tension continue et inversement, ces terminaux étant connectés entre un réseau d'alimentation électrique alternatif et la partie continue de ladite installation. Chacun de ces terminaux fournit ou prélève une puissance sur la partie continue de l'installation.

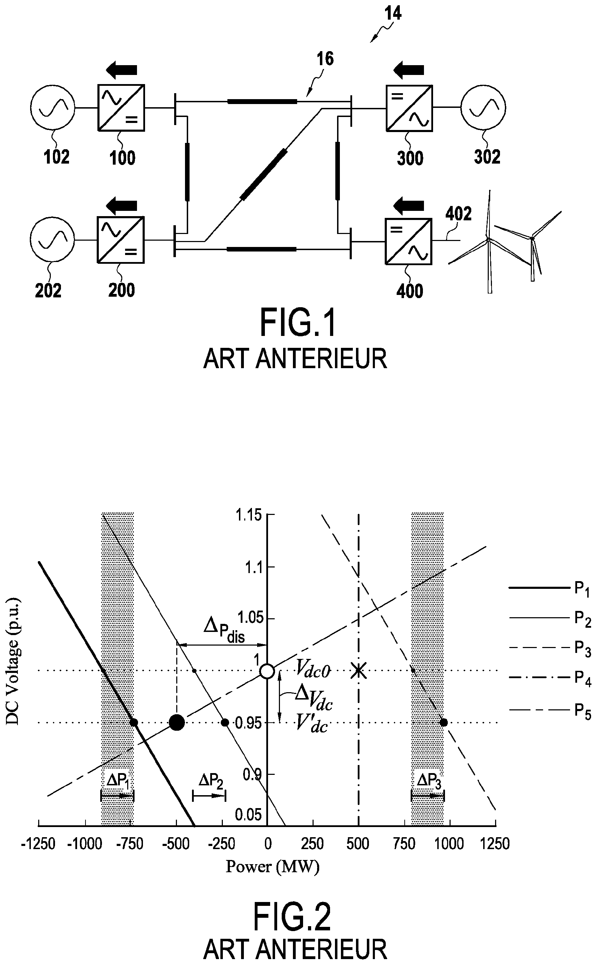

Un exemple d'une telle installation HVDC **14** est montré sur la figure **1**. Dans cet exemple, des premier **100,** deuxième **200,** troisième **300** et quatrième **400** terminaux sont reliés respectivement à des premier **102,** deuxième **202,** troisième **302** et quatrième **402** réseaux d'alimentation électrique alternatifs. Ces quatre terminaux sont également connectés à une partie continue **16** de l'installation via des lignes à courant continu. Dans cet exemple, le quatrième terminal **400** est relié à un parc éolien et transfère à la partie continue **16** de l'installation une puissance constante.

En pratique, la tension de la partie continue de ce type d'installation est amenée à varier. Par exemple, un terminal peut tomber en panne ou être déconnecté de la partie continue de l'installation, ou d'un des réseaux d'alimentation électrique alternatifs, pour des opérations de maintenance. Dans ce cas, le terminal ne fournit ou ne prélève plus de puissance sur la partie continue de l'installation, de sorte qu'un déséquilibre global apparait entre la puissance prélevée et la puissance fournie à la partie continue de l'installation. La puissance fournie ou prélevée ainsi que la tension de la partie continue augmentent ou diminuent conjointement. A titre d'exemple, le quatrième terminal **400** peut tomber en panne, de sorte que la puissance fournie à la partie continue et donc la tension de la partie continue de l'installation diminuent.

On connaît des dispositifs de contrôle selon l'art antérieur permettant de contrôler les terminaux d'une installation afin de compenser la perte de puissance de la partie continue, en augmentant la contribution en puissance de chacun des terminaux **100,200,300** restants (voir par exemple les publications CN105281356 A, CN104821595 A, US2013/285460 A1, GB2537684 A, WO2012/000548 A1).

Un exemple d'une telle compensation réalisée par un dispositif selon l'art antérieur est donné en figure **2**. Le graphique de la figure **2** représente l'évolution de la tension de la partie continue **16** de l'installation **14** de la figure **1,** en fonction de la puissance fournie ou prélevée par chacun des terminaux contrôlés par le dispositif selon l'art antérieur, sur ladite partie continue. $P_5$ est une courbe caractéristique représentant la variation de tension de la partie continue **16** de l'installation en cas de déséquilibre entre la puissance fournie et la puissance prélevée sur la partie continue de l'installation, par exemple suite à une panne du quatrième terminal **400**. Un déficit de puissance $\Delta P_{dis}$, équivalent à 500MW, apparaît en raison de la perte du quatrième terminal qui fournissait initialement une puissance de 500MW à la partie continue de l'installation. Ce déficit en puissance subi par l'installation entraine une diminution de la tension de la partie continue, d'une tension $\Delta V_{dc}$. La tension de la partie continue, qui était initialement égale à $V_{dc0}$ est désormais égale à la tension modifiée $V'_{dc}$.

Pour compenser ce déficit en puissance de la partie continue de l'installation et cette baisse de tension de la partie continue, le dispositif de contrôle selon l'art antérieur propose de faire varier les puissances fournies ou prélevées par les premier **100,** deuxième **200** et troisième **300** terminaux en fonction de la baisse de tension de la partie continue **16** de l'installation. Ces variations de puissance sont linéaires, elles sont représentées respectivement par les courbes $P_1$, $P_2$, $P_3$ et $P_4$. Les courbes $P_1$, $P_2$ et $P_3$ permettent de définir respectivement des puissances de compensation $\Delta P_1$, $\Delta P_2$ et $\Delta P_3$ pouvant être fournies par les premier **100,** deuxième **200** et troisième **300** terminaux pour compenser la baisse de tension $\Delta V_{dc}$ de la partie continue de l'installation. On constate que l'évolution des courbes $P_1$, $P_2$ et $P_3$ est identique de sorte que les puissances de compensation $\Delta P_1$, $\Delta P_2$ et $\Delta P_3$ sont égales et vérifient :

$$\Delta P_1 = \Delta P_2 = \Delta P_3 = -\frac{\Delta P_{dis}}{3}$$

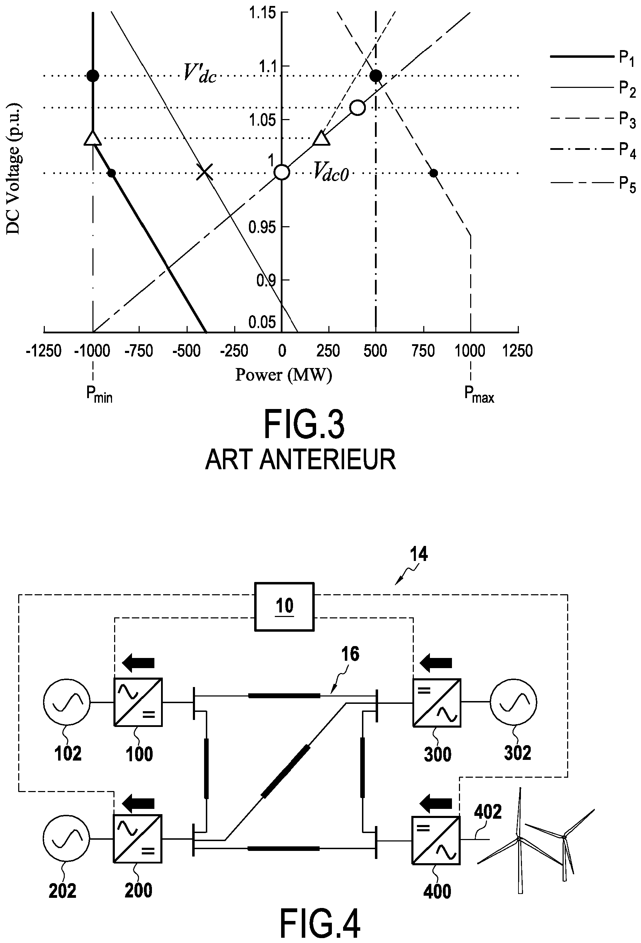

En pratique, la puissance fournie ou prélevée par chacun des terminaux sur la partie continue des installations HVDC est toutefois limitée par une limite supérieure de puissance et une limite inférieure de puissance. Ces limites supérieure et inférieure de puissance sont fixées par le constructeur. Lorsque la puissance fournie ou prélevée par un terminal atteint une de ces limites de puissance, ledit terminal risque d'être endommagé. Lesdites limites supérieure et inférieure de puissance définissent une plage de fonctionnement nominal du convertisseur. La figure **3** illustre l'évolution de la puissance fournie ou prélevée par les terminaux de la figure **1,** contrôlés par un dispositif selon l'art antérieur, prenant en compte ces limites. Dans cet exemple, le deuxième terminal **200,** qui prélevait de la puissance sur la partie continue de l'installation, tombe en panne, sa courbe étant marquée d'une croix. Une perturbation en puissance apparaît et la tension de la partie continue **16** subit une augmentation non voulue. Les limites de puissance supérieure $P_{max}$ et inférieure $P_{min}$ des terminaux sont respectivement égales à 1000MW et -1000MW.

Lorsque la puissance fournie ou prélevée par l'un des terminaux atteint la limite supérieure ou inférieure de puissance, ce terminal doit être placé en saturation pour ne pas être endommagé. La puissance qu'il fournit ou prélève sur la partie continue est alors maintenue constante. Dans l'exemple de la figure **3,** le deuxième terminal tombe en panne, entraînant une baisse de la puissance prélevée sur la partie continue de l'installation, qui doit être compensée par les premier et troisième terminaux. La puissance prélevée par le premier terminal **100** atteint la limite de puissance inférieure $P_{min}$, avant que la tension modifiée $V'_{dc}$ de la partie continue ne soit atteinte. Aussi, ce premier terminal **100** est placé en saturation de sorte que la puissance qu'il prélève ne peut plus varier. Dès lors, le terminal **100** ne peut pas prélever davantage de puissance pour interrompre ou compenser l'augmentation de tension. Il ne contribue donc plus à la compensation de l'augmentation de tension sur la partie continue. La compensation est alors poursuivie par les autres terminaux dont la puissance fournie ou prélevée peut encore varier, en l'espèce par le troisième terminal, ce qui n'est toujours pas suffisant pour compenser l'augmentation de tension de la partie continue **16** et risque de plus d'entrainer une nouvelle augmentation de la tension de la partie continue de l'installation, ce qui n'est pas souhaitable.

Objet et résumé de l'invention

Un but de la présente invention est de proposer un dispositif de contrôle d'un terminal d'une installation HVDC remédiant aux problèmes précités.

Pour ce faire, l'invention porte sur un dispositif de contrôle d'un terminal connecté dans une installation de transport de courant continu haute tension multi-terminaux, le terminal étant connecté entre un premier réseau d'alimentation électrique alternatif et une partie continue de ladite installation, le terminal étant apte à fournir ou prélever une puissance sur la partie continue de l'installation comprise entre une limite de puissance supérieure et une limite de puissance inférieure, le dispositif comprenant en outre au moins un module de régulation configuré pour faire varier la puissance fournie ou prélevée par le terminal sur la partie continue de l'installation, en fonction d'une variation de tension sur la partie continue de l'installation, le dispositif comprenant en outre un module de limitation configuré pour limiter la variation de la puissance fournie ou prélevée par le terminal, pour une variation de tension donnée, lorsque l'écart de puissance entre la puissance fournie ou prélevée par ledit terminal et la limite de puissance supérieure ou la limite de puissance inférieure devient inférieur à une valeur déterminée.

L'installation peut comprendre de deux à plusieurs dizaines de terminaux, dont le terminal contrôlé par le dispositif de contrôle selon l'invention. Ledit terminal constitue une interface entre la partie continue de l'installation et le premier réseau d'alimentation électrique alternatif.

La partie continue de l'installation permet le transport du courant continu entre les terminaux de ladite installation. Elle peut comprendre une ou plusieurs lignes de transport à courant continu reliant lesdits terminaux.

Par ailleurs, le réseau d'alimentation électrique alternatif peut comprendre une ou plusieurs lignes de transmission du courant alternatif. Ces lignes peuvent être reliées à une source de courant alternatif, par exemple d'un parc éolien.

De préférence, le terminal comprend au moins un convertisseur de tension permettant de convertir une tension alternative en une tension continue et inversement. De manière non limitative, ce convertisseur peut être un convertisseur modulaire multi-niveaux (MMC) en demi-pont, dit Half-Bridge (HB), un convertisseur en pont complet, dit Full-Bridge (FB) ou encore un convertisseur ayant une structure en Alternate Arm Converter (AAC). Ces structures sont bien connues de l'homme du métier.

La puissance fournie ou prélevée par le terminal sur la partie continue de l'installation représente la contribution dudit terminal sur la partie continue de l'installation. Lorsque le terminal fournit une puissance, notée par un signe positif, le terminal fonctionne en mode redresseur et se comporte comme un générateur. Lorsque le terminal prélève une puissance, notée par un signe négatif, sur la partie continue, le terminal fonctionne en mode onduleur et se comporte comme une charge. Les installations HVDC comprennent généralement ces deux types de terminaux.

Les limites de puissance supérieure et inférieure sont des limites de fonctionnement du terminal au-delà desquelles le terminal risque d'être endommagé et n'est plus à apte à fournir ou prélever une puissance sur la partie continue de l'installation. Lorsque la puissance prélevée ou fournie par un terminal atteint une de ces limites, il doit être placé en saturation.

La variation de tension de la partie continue de l'installation peut être causée par une panne, par un exemple d'un des autres terminaux de l'installation, ou encore par des opérations de maintenance. La panne d'un terminal entraine une perturbation en puissance de l'installation, et donc une variation de la puissance de la partie continue de l'installation, positive ou négative, qui n'est pas souhaitable. Cette perturbation en puissance entraine une augmentation ou une diminution proportionnelle de la tension de la partie continue.

Le module de régulation est configuré pour augmenter ou diminuer la puissance fournie ou prélevée par le terminal sur la partie continue afin de compenser cette perturbation en puissance et donc limiter la variation de tension de la partie continue associée. Encore de préférence, le module de régulation permet d'interrompre la variation de tension et encore de préférence de compenser ladite variation de tension. Le terminal est donc apte à fournir une puissance de compensation positive ou négative pour limiter, interrompre ou compenser au moins partiellement une telle variation de tension sur la partie continue de l'installation. Le module de régulation est de préférence, mais de manière non limitative, implanté localement, à proximité du terminal.

Le module de limitation permet de limiter la variation de la puissance fournie ou prélevée par le terminal, en réponse à une variation de tension donnée, lorsque cette puissance est proche de la limite de puissance supérieure ou inférieure. Un intérêt est d'éviter que la puissance prélevée ou fournie par le terminal n'atteigne cette limite et ainsi éviter de devoir désactiver l'action de compensation de la variation de tension, en plaçant le terminal en saturation. En conséquence, grâce à l'invention, la compensation réalisée par le terminal est réduite à l'approche de sa limite de puissance inférieure ou supérieure et la puissance fournie ou prélevée par le terminal est maintenue entre les limites de puissance inférieure et supérieure. Le comportement du terminal est donc anticipé et mieux maîtrisé, ce qui améliore la stabilité de l'ensemble de l'installation.

Contrairement aux solutions de l'art antérieur dans lesquelles la puissance fournie ou prélevée par un terminal, pour limiter une variation de tension sur la partie continue, varie de manière identique et linéaire pour tous les terminaux, le dispositif selon l'invention permet de prendre en considération la contribution initiale du terminal, c'est-à-dire la puissance qu'il fournit ou prélève initialement sur la partie continue, et d'adapter la variation de la puissance fournie ou prélevée par ce terminal à ses limites de fonctionnement, afin de ne pas atteindre ces limites. Le comportement du terminal est adapté lorsque la puissance qu'il fournit ou prélève approche des limites de puissance.

L'écart de puissance entre la puissance fournie ou prélevée par ledit terminal et la limite de puissance supérieure ou la limite de puissance inférieure est préférentiellement calculé en temps réel.

La valeur déterminée de l'écart de puissance en-dessous de laquelle le module de limitation est configuré pour limiter la variation de la puissance fournie ou prélevée par le terminal peut être choisie de manière arbitraire par un opérateur ou peut être fonction de l'état du terminal ou de l'installation.

De manière non limitative, le module de limitation peut limiter la variation de puissance fournie ou prélevée par le terminal en fournissant au module de régulation des données de limitation ou en envoyant un signal de limitation au module de régulation. Le module de régulation adapte la variation de puissance fournie ou prélevée, pour une variation de tension donnée, en fonction des données de limitation ou du signal de limitation fournis par le module de limitation.

De préférence, le module de régulation est configuré pour augmenter la puissance fournie ou diminuer la puissance prélevée par le terminal sur la partie continue de l'installation en cas de baisse de tension sur la partie continue de l'installation. Par la suite, l'expression « augmenter la puissance fournie » correspond à une variation de puissance dans le sens positif. Aussi, une augmentation de puissance fournie tend à éloigner la puissance fournie d'une puissance nulle. De même, une « diminution de puissance prélevée » correspond à une variation positive de la puissance prélevée.

Une baisse de la puissance fournie ou une augmentation de la puissance prélevée sur la partie continue de l'installation entraine une baisse de la tension de la partie continue qui doit être compensée. Par exemple, la panne d'un autre terminal de l'installation fournissant initialement une puissance à la partie continue de l'installation implique un déficit de puissance de la partie continue. Le module de régulation permet dans ce cas d'augmenter la puissance fournie ou de diminuer la puissance prélevée par le terminal afin d'augmenter la puissance de la partie continue. Le terminal fournit alors une puissance de compensation positive.

Avantageusement, le module de limitation est configuré pour limiter l'augmentation de la puissance fournie ou la diminution de la puissance prélevée par le terminal sur la partie continue de l'installation, pour une baisse de tension donnée, lorsque l'écart de puissance entre ladite puissance fournie ou prélevée par le terminal et la limite de puissance supérieure devient inférieur à la valeur déterminée. De cette manière, à l'approche de la limite de puissance supérieure, la puissance de compensation fournie par le terminal est réduite, pour une baisse de tension donnée. Le risque que la puissance fournie ou prélevée par le terminal atteigne la limite de puissance supérieure est donc réduit.

Par exemple, lorsque le terminal fonctionne en mode redresseur, il fournit initialement une puissance importante à la partie continue de l'installation, proche de sa limite de puissance supérieure, de sorte que l'écart entre la puissance fournie par le terminal et la limite supérieure est inférieur à la valeur déterminée. Si une baisse de tension intervient sur la partie continue de l'installation, ledit terminal ne peut alors fournir qu'une faible puissance de compensation. La puissance qu'il fournit à la partie continue ne peut qu'augmenter légèrement avant d'atteindre la limite de puissance supérieure. Grâce à l'invention, l'augmentation de la puissance qu'il fournit, pour une baisse de tension donnée, et donc la puissance de compensation fournie, sont limitées et la puissance fournie par le terminal est maintenue en-dessous de ladite limite de puissance supérieure.

Un avantage est d'améliorer le contrôle du terminal et la stabilité de l'installation en cas de baisse de tension.

De manière avantageuse, le module de régulation est configuré pour diminuer la puissance fournie ou augmenter la puissance prélevée par le terminal sur la partie continue de l'installation en cas d'augmentation de tension sur la partie continue de l'installation. Par la suite, l'expression « diminution de la puissance fournie » désigne une variation de la puissance fournie dans le sens négatif. Aussi, une diminution de puissance fournie fait tendre la puissance fournie vers une puissance nulle. De même, une augmentation de la puissance prélevée éloigne la puissance prélevée de la puissance nulle. Un terminal dont la puissance prélevée sur la partie continue augmente tend donc à prélever davantage de puissance.

Une augmentation de la puissance fournie ou une baisse de la puissance prélevée sur la partie continue de l'installation entraine une augmentation de la tension de la partie continue qui doit être compensée. Par exemple, la panne d'un autre terminal de l'installation prélevant une puissance à la partie continue de l'installation implique un surplus de puissance de la partie continue. Le module de régulation permet dans ce cas de diminuer la puissance fournie ou d'augmenter la puissance prélevée par le terminal, afin de diminuer la puissance de la partie continue. Le terminal fournit alors une puissance de compensation négative.

Préférentiellement, le module de limitation est configuré pour limiter la diminution de la puissance fournie ou l'augmentation de puissance prélevée par le terminal sur la partie continue de l'installation, pour une augmentation de tension donnée, lorsque l'écart de puissance entre ladite puissance fournie ou prélevée par le terminal et la limite de puissance inférieure est inférieur à la valeur déterminée.

De cette manière, à l'approche de la limite de puissance inférieure, la puissance de compensation négative fournie par le terminal est réduite, pour une variation de tension donnée. Le risque que la puissance fournie ou prélevée par le terminal atteigne la limite de puissance inférieure est donc réduit.

Par exemple, lorsque le terminal fonctionne en mode onduleur, il prélève initialement une puissance importante sur la partie continue de l'installation, proche de sa limite de puissance inférieure. Si une augmentation de tension intervient sur la partie continue de l'installation, ledit terminal ne peut alors prélever qu'une faible puissance de compensation supplémentaire. La puissance qu'il prélève à la partie continue ne peut qu'augmenter légèrement avant d'atteindre la limite de puissance inférieure. Grâce à l'invention, l'augmentation de la puissance qu'il prélève et donc la puissance de compensation prélevée sont limitées et la puissance prélevée par le terminal est maintenue au-dessus de ladite limite de puissance inférieure.

Un avantage est là-encore d'améliorer le contrôle du terminal et la stabilité de l'installation en cas d'augmentation de tension de la partie continue.

Avantageusement, le module de limitation est configuré pour accroître la variation de la puissance fournie ou prélevée par le terminal sur la partie continue de l'installation, pour une variation de tension donnée, lorsque l'écart de puissance entre ladite puissance fournie ou prélevée par le terminal et la limite de puissance supérieure ou la limite de puissance inférieure est supérieur à une valeur déterminée supplémentaire. Un intérêt est de permettre au terminal de contribuer davantage à la compensation de la variation de tension sur la partie continue lorsque la puissance qu'il fournit ou prélève sur la partie continue est éloignée de sa limite de puissance supérieure ou de sa limite de puissance inférieure.

Le terminal peut par exemple fournir initialement une puissance faible à la partie continue de l'installation, très inférieure à sa limite de puissance supérieure, de sorte que l'écart entre la puissance fournie par le terminal et la limite supérieur est supérieur à la valeur déterminée supplémentaire. Si une baisse de tension intervient sur la partie continue de l'installation, ledit terminal est alors apte à fournir une puissance de compensation importante. La puissance qu'il fournit à la partie continue peut augmenter de manière significative.

La valeur déterminée supplémentaire est de préférence supérieure à la valeur déterminée. Sans sortir du cadre de l'invention, la valeur déterminée supplémentaire peut être égale à la valeur déterminée.

Préférentiellement, le module de limitation comprend un module de gestion configuré pour allouer au terminal une limite de compensation en puissance supérieure $P_{sup}$ et une limite de compensation en puissance inférieure $P_{inf}$ à partir de valeurs de puissance maximales et minimales fournies par le premier réseau d'alimentation électrique alternatif et de consignes de puissances de fonctionnement du terminal.

Lesdites valeurs de puissance maximales et minimales correspondent à des limites de puissances supérieure et inférieure que le premier réseau d'alimentation électrique alternatif est capable de fournir.

Les limites de compensation supérieure $P_{sup}$ et inférieure $P_{inf}$ définissent respectivement une plage de puissance supérieure et une plage de puissance inférieure, allouées au terminal, dans lesquelles peut varier la puissance fournie ou prélevée par le terminal. Cette plage de puissance supérieure est également appelée UVCR (« Under Voltage Containment Reserve » en langue anglaise) et cette plage de puissance inférieure est également appelée OVCR (« Over Voltage Containment Reserve » en langue anglaise).

UVCR correspond à une plage de puissance dans laquelle peut varier la puissance fournie ou prélevée par le terminal afin de compenser une baisse de tension de la partie continue. Elle peut être calculée selon l'expression suivante :

$$UVCR = (P_{sup} - P_0)$$

$P_0$ étant la puissance fournie ou prélevée par le terminal en l'absence de perturbation.

OVCR correspond à une plage de puissance dans laquelle peut varier la puissance fournie ou prélevée par le terminal afin de compenser une augmentation de tension de la partie continue. Elle peut être calculée selon l'expression suivante :

$$OVCR = (P_{inf} - P_0)$$

Le terminal peut donc fournir une puissance de compensation comprise dans la plage de puissance supérieure ou inférieure. Ces limites dépendent de données de fonctionnement du terminal, de sorte que le contrôle du terminal est mieux maîtrisé. Elles peuvent être choisies de manière à ne pas endommager le terminal et à respecter ses contraintes de fonctionnement.

De préférence, la plage de puissance inférieure OVCR est déterminée de manière à respecter l'équation :

$$POVCR \leq OVCR \leq 0$$

POVCR (« Procurable Over Voltage Containement Reserve » en langue anglaise) correspond à la plage de puissance inférieure maximale pouvant être sécurisée par le terminal pour compenser une augmentation de tension de la partie continue de l'installation.

POVCR est de préférence déterminée d'après l'équation suivante :

$$POVCR = \max(P_{min} - P_0, POVCR^{AC})$$

POVCR$^{AC}$ est la réserve de puissance inférieure maximale pouvant être fournie par le premier réseau d'alimentation électrique alternatif au terminal. $P_{min}$ est la limite de puissance inférieure du terminal.

L'équation suivante est vérifiée :

$$POVCR^{AC} = P^{ACmin} - P_0$$

où $P^{ACmin}$ est une valeur de puissance minimale pouvant être fournie par le réseau d'alimentation électrique alternatif au terminal.

De préférence, la plage de puissance supérieure UVCR est déterminée de manière à respecter l'équation :

$$0 \leq UVCR \leq PUVCR$$

PUVCR (« Procurable Under Voltage Containement Reserve » en langue anglaise) correspond à la plage de puissance supérieure maximale pouvant être sécurisée par le terminal pour interrompre ou compenser une baisse de tension de la partie continue de l'installation.

PUVCR est de préférence déterminée d'après l'équation suivante :

$$PUVCR = \min(P_{max} - P_0, PUVCR^{AC})$$

PUVCR$^{AC}$ est la plage de puissance supérieure maximale pouvant être fournie par le premier réseau d'alimentation électrique alternatif au terminal.

L'équation suivante est vérifiée :

$$PUVCR^{AC} = P^{ACmax} - P_0$$

où $P^{ACmax}$ est une valeur de puissance maximale pouvant être fournie par le réseau d'alimentation électrique alternatif au terminal.

En cas de panne d'un terminal référencé « k », le module de gestion est de préférence configuré pour réguler la plage de puissance supérieure UVCR et la plage de puissance inférieure OVCR afin de respecter à chaque instant les inégalités suivantes:

$$\sum_{m=1,m\neq k}^{N} UVCR_m \geq P_k^* \text{ si } P_k^* \geq 0$$

$$\sum_{m=1,m\neq k}^{N} OVCR_m \leq P_k^* \text{ si } P_k^* \leq 0$$

Dans ces équations, N est le nombre de terminaux de l'installation, $UVCR_m$ et $OVCR_m$ sont les plages de puissance supérieure et inférieure attribuées à chacun des terminaux m de l'installation, $P_k^*$ est la puissance fournie ou prélevée par le terminal « k » en l'absence de perturbation.

En maintenant ces conditions, la perturbation en puissance et en tension induite par la perte du terminal « k » de l'installation peut toujours être interrompue ou compensée par les autres terminaux de l'installation.

Avantageusement, le module de gestion met en oeuvre un calcul à partir des fonctions d'optimisation suivantes :

$$\min\left(\sum_{m=1}^{N} -\varphi_m^{OVCR} OVCR_m\right)$$

$$\min\left(\sum_{m=1}^{N} \varphi_m^{UVCR} UVCR_m\right)$$

où $\varphi_m^{OVCR}$ et $\varphi_m^{UVCR}$ sont des coefficients de pondération dépendants du coût d'approvisionnement en énergie de chacun des terminaux de l'installation.

De préférence, la limite de compensation en puissance supérieure $P_{sup}$ est inférieure à la limite de puissance supérieure, de sorte que la puissance fournie par le terminal est limitée par cette limite de puissance supérieure. De même, la limite de compensation en puissance inférieure $P_{inf}$ est de préférence supérieure à la limite de puissance inférieure, de sorte que la puissance prélevée par le terminal est limitée par cette limite de puissance inférieure.

Selon un aspect particulièrement avantageux de l'invention, le module de limitation est configuré pour déterminer une constante de survoltage $g^+$ et une constante de sous-voltage $g^-$, différente de la constante de survoltage, associées au terminal, et le module de régulation est configuré pour faire varier la puissance fournie ou prélevée par le terminal sur la partie continue de l'installation par application de la relation linéaire :

$$\Delta P = -g^+ \Delta v_{dc} \text{ si } \Delta v_{dc} > 0$$

et

$$\Delta P = -g^- \Delta v_{dc} \text{ si } \Delta v_{dc} < 0$$

où $\Delta P$ est la variation de la puissance fournie ou prélevée par le terminal, induite par le module de régulation, $\Delta v_{dc}$ est la variation de tension sur la partie continue de l'installation. Un intérêt est de pouvoir facilement ajuster la contribution en puissance d'un terminal en ajustant la constante de sous-voltage ou la constante de survoltage.

On comprend que le module de limitation limite la variation de puissance prélevée ou fournie par le terminal en fournissant au module de régulation les constantes de sous-voltage $g^-$ et de survoltage $g^+$.

L'homme du métier comprend que la constante de survoltage peut également être nommée constante de surtension et que la constante de sous-voltage peut également être nommée constante de sous-tension. Les constantes de sous-voltage et de survoltage sont également appelés paramètres de « droop ».

La variation de puissance fournie ou prélevée par le terminal en fonction de la variation de tension sur la partie continue de l'installation est donc linéaire et peut être modélisée par une fonction affine, dont les constantes de sous-voltage $g^-$ et de survoltage $g^+$ sont les coefficients directeurs.

Plus la constante de sous-voltage $g^-$ est faible, moins l'augmentation de puissance fournie ou la diminution de puissance prélevée est importante, pour une baisse de tension donnée. De même, plus la constante de survoltage $g^+$ est faible, moins la baisse de puissance fournie est importante et plus l'augmentation de puissance prélevée est faible, pour une augmentation de tension donnée.

La variation $\Delta P$ de puissance fournie ou prélevée peut être adaptée en modifiant les constantes de sous-voltage et de survoltage. En particulier, le module de limitation permet de déterminer les constantes de sous-voltage et les constantes de survoltage de manière indépendante. Grâce au dispositif selon l'invention, il est donc possible de définir une variation de puissance fournie ou prélevée par le terminal différente pour une baisse de tension et pour une augmentation de tension de la partie continue. Un intérêt est de pouvoir adapter cette variation aux besoins de l'installation et en fonction des limites de puissance supérieures et inférieures des différents terminaux.

Le module de limitation peut déterminer les constantes de sous-voltage et de survoltage de manière centralisée. Ces constantes peuvent être prédéterminées et mises à jour périodiquement.

De manière non limitative, le module de limitation peut déterminer de manière centralisée une pluralité de constantes de sous-voltage et de survoltage propres à une pluralité de terminaux.

De préférence, le module de limitation est configuré pour déterminer une constante de sous-voltage $g^-$ inférieure à la constante de survoltage $g^+$ lorsque l'écart de puissance entre la puissance fournie ou prélevée par le terminal sur la partie continue de l'installation et la limite de puissance supérieure est inférieur à la valeur déterminée. Un intérêt est de réduire la contribution du terminal pour compenser une baisse de tension, lorsque sa puissance fournie ou prélevée est proche de la limite de puissance supérieure, tout en permettant sa contribution à la compensation d'une augmentation de tension sur la partie continue.

De manière non limitative, pour un terminal dont la puissance initialement fournie est proche de la limite de puissance supérieure, le module de limitation détermine une constante de sous-voltage faible, de manière à réduire l'augmentation de puissance fournie, pour une baisse de tension donnée. En revanche, le module de limitation détermine une constante de survoltage supérieure à la constante de sous-voltage pour que la diminution de puissance fournie pour une augmentation de tension donnée ne soit pas autant limitée.

Avantageusement, le module de limitation est configuré pour déterminer une constante de survoltage $g^+$ inférieure à la constante de sous-voltage $g^-$ lorsque l'écart de puissance entre la puissance fournie ou prélevée par le terminal sur la partie continue de l'installation et la limite de puissance inférieure est inférieur à la valeur déterminée. Un intérêt est de réduire la contribution du terminal pour compenser une augmentation de tension, lorsque sa puissance fournie ou prélevée est proche de la limite de puissance inférieure, tout en permettant sa contribution à la compensation d'une baisse de tension sur la partie continue.

De manière non limitative, pour un terminal prélevant initialement une puissance proche de la limite de puissance inférieure, le module de limitation détermine une constante de survoltage faible, de manière à limiter l'augmentation de puissance prélevée, pour une augmentation de tension donnée. En revanche, le module de limitation détermine une constante de sous-voltage supérieure à la constante de survoltage pour que la diminution de puissance prélevée, pour une baisse de tension donnée ne soit pas autant limitée.

De manière avantageuse, le module de limitation comprend un calculateur configuré pour déterminer une constante de sous-voltage $g^-$ vérifiant la relation :

$$g^- = -\frac{(P_{sup} - P_0)}{(V_{dc}^{lim-} - V_{dc0})} = -\frac{UVCR}{(V_{dc}^{lim-} - V_{dc0})}$$

où $V_{dc}^{lim-}$ est la limite inférieure de tension fixée de la partie continue de l'installation, $V_{dc0}$ est la tension nominale de la partie continue de l'installation en l'absence de perturbation et $P_0$ est la puissance fournie ou prélevée par le terminal en l'absence de perturbation.

Un intérêt est d'adapter la variation de la puissance fournie ou prélevée par le terminal aux limites imposées par le terminal et par l'installation. Le module de limitation permet notamment de maintenir conjointement la puissance fournie ou prélevée par le terminal sur la partie continue en dessous de la limite de compensation en puissance supérieure et la tension de la partie continue au-dessus de la limite de tension inférieure.

$P_0$ est la puissance fournie ou prélevée par le terminal lorsque la tension de la partie continue ne varie pas.

Encore de préférence, le module de limitation comprend un calculateur configuré pour déterminer une constante de survoltage $g^+$ vérifiant la relation :

$$g^+ = -\frac{(P_0 - P_{\text{inf}})}{(V_{dc0} - V_{dc}^{lim+})} = \frac{OVCR}{(V_{dc0} - V_{dc}^{lim+})}$$

où $V_{dc}^{lim+}$ est la limite supérieure de tension fixée de la partie continue de l'installation, $V_{dc0}$ est la tension nominale de la partie continue de l'installation en l'absence de perturbation et $P_0$ est la puissance fournie ou prélevée par le terminal en l'absence de perturbation.

Le module de limitation permet notamment de maintenir conjointement la puissance fournie ou prélevée par le terminal sur la partie continue au-dessus de la limite de compensation en puissance inférieure et la tension de la partie continue en-dessous de la limite de tension supérieure.

Avantageusement, l'installation comprend une pluralité de terminaux étant chacun connecté entre un réseau d'alimentation électrique alternatif et la partie continue de ladite installation, chacun des terminaux étant apte à fournir ou prélever une puissance sur la partie continue de l'installation comprise entre une limite de puissance supérieure et une limite de puissance inférieure qui lui sont propres, le module de régulation étant configuré pour faire varier la puissance fournie ou prélevée par chacun des terminaux sur la partie continue de l'installation de l'installation, en fonction d'une variation de tension sur la partie continue de l'installation, le module de limitation étant configuré pour limiter la variation de la puissance fournie ou prélevée par chacun des terminaux, pour une variation de tension donnée, lorsque l'écart de puissance entre la puissance fournie ou prélevée par lesdits terminaux et la limite de puissance supérieure ou la limite de puissance inférieure qui leurs sont propres devient inférieur à une valeur déterminée.

Le dispositif selon l'invention peut donc contrôler simultanément et de manière centralisée une pluralité de terminaux, indépendamment les uns des autres. Ceci améliore la stabilité de l'ensemble de l'installation. En outre, la panne d'un terminal peut être compensée par chacun des autres terminaux restants.

En variante, le module de régulation peut comprendre une pluralité de sous-modules de régulation, chacun étant disposé localement à proximité d'un terminal qui lui est propre. Chacun de ces sous-modules de régulation est configuré pour faire varier la puissance fournie ou prélevée par le terminal qui lui est propre.

De manière non limitative, le module de limitation peut être un module centralisé configuré pour limiter les variations de puissances fournies ou prélevées par plusieurs terminaux de l'installation et, de préférence, limiter la variation de la tension de la partie continue de l'installation entre les limites de tension supérieure et inférieure. Dans cette variante, il fournit à chacun des sous-modules de régulation des constantes de sous-voltage et de survoltage propres au terminal associé au sous-module de régulation.

L'invention porte également sur une installation de transport de courant continu haute tension multi-terminaux, comprenant au moins un terminal connecté entre un premier réseau d'alimentation électrique alternatif et une partie continue de ladite installation, le terminal étant apte à fournir ou prélever une puissance sur la partie continue de l'installation comprise entre une limite de puissance supérieure et une limite de puissance inférieure, l'installation comprenant un dispositif de contrôle du terminal (par exemple un dispositif de contrôle selon l'un des modes de réalisation décrit ci-avant) comprenant en outre au moins un module de régulation configuré pour faire varier la puissance fournie ou prélevée par le terminal sur la partie continue de l'installation, en fonction d'une variation de tension sur la partie continue de l'installation, le module de régulation comprenant un module de limitation configuré pour limiter la variation de la puissance fournie ou prélevée par le terminal, pour une variation de tension donnée, lorsque l'écart de puissance entre la puissance fournie ou prélevée par ledit terminal et la limite de puissance supérieure ou la limite de puissance inférieure devient inférieur à une valeur déterminée.

Enfin, l'invention porte sur un procédé de contrôle d'un terminal connecté dans une installation de transport de courant continu haute tension multi-terminaux, le terminal étant connecté entre un premier réseau d'alimentation électrique alternatif et une partie continue de ladite installation, le terminal étant apte à fournir ou prélever une puissance sur la partie continue de l'installation comprise entre une limite de puissance supérieure et une limite de puissance inférieure, le procédé comprenant une étape de variation de la puissance fournie ou prélevée par le terminal sur la partie continue de l'installation, en fonction d'une variation de tension sur la partie continue de l'installation, et une étape de limitation de la variation de la puissance fournie ou prélevée par le terminal, pour une variation de tension donnée, lorsque l'écart de puissance entre la puissance fournie ou prélevée par ledit terminal et la limite de puissance supérieure ou la limite de puissance inférieure devient inférieur à une valeur déterminée

Ce procédé peut mettre en oeuvre des étapes correspondant à chacun des modes de réalisation du dispositif de contrôle tel que décrit ci-avant.

Brève description des dessins

L'invention sera mieux comprise à la lecture de la description qui suit d'un mode de réalisation de l'invention donné à titre d'exemple non limitatif, en référence aux dessins annexés, sur lesquels :

- la figure **1** illustre une installation HVDC selon l'art antérieur ;
- la figure **2** illustre l'évolution de la tension de la partie continue de l'installation de la figure **1,** en réponse à la panne du quatrième terminal;
- la figure **3** illustre l'évolution de la puissance des terminaux de la figure **1,** en réponse à la panne du deuxième terminal;
- la figure **4** illustre une installation HVDC dont les terminaux sont contrôlés par un dispositif de contrôle selon l'invention ;
- la figure **5** illustre un dispositif de contrôle selon l'invention ;
- la figure **6** illustre l'évolution de la puissance des terminaux de la figure **4** en fonction de la tension de la partie continue;
- la figure **7** illustre les variations de puissances des terminaux de l'installation de la figure **1,** contrôlés par un dispositif selon l'art antérieur;
- la figure **8** illustre la variation de la tension de la partie continue de installation de la figure **1,** dont les terminaux sont contrôlés par un dispositif selon l'art antérieur;
- la figure **9** illustre les variations de puissances des terminaux de l'installation de la figure **4,** contrôlés par un dispositif selon l'invention; et
- la figure **10** illustre la variation de la tension de la partie continue de l'installation de la figure **4,** dont les terminaux sont contrôlés par un dispositif selon l'invention.

## Description détaillée de l'invention

L'invention porte sur un dispositif **10** de contrôle d'un terminal **100** connecté à une installation **14** de transport de courant continu haute tension multi-terminaux HVDC.

La figure **4** illustre une installation **14** comprenant des premier **100,** deuxième **200,** troisième **300** et quatrième **400** terminaux ainsi qu'un dispositif de contrôle **10** selon l'invention. Dans cet exemple, le dispositif de contrôle **10** est configuré pour contrôler les premier **100,** deuxième **200,** troisième **300** et quatrième **400** terminaux.

Les premier **100,** deuxième **200,** troisième **300** et quatrième **400** terminaux sont reliés respectivement à des premier **102,** deuxième **202,** troisième **302** et quatrième **402** réseaux d'alimentation électrique alternatifs. On constate que le quatrième terminal **400** est relié à un parc éolien. Ces quatre terminaux sont également connectés à une partie continue **16** de l'installation **14** via des lignes à courant continu. Les terminaux sont des convertisseurs de tension, configurés pour convertir une tension alternative en une tension continue et inversement

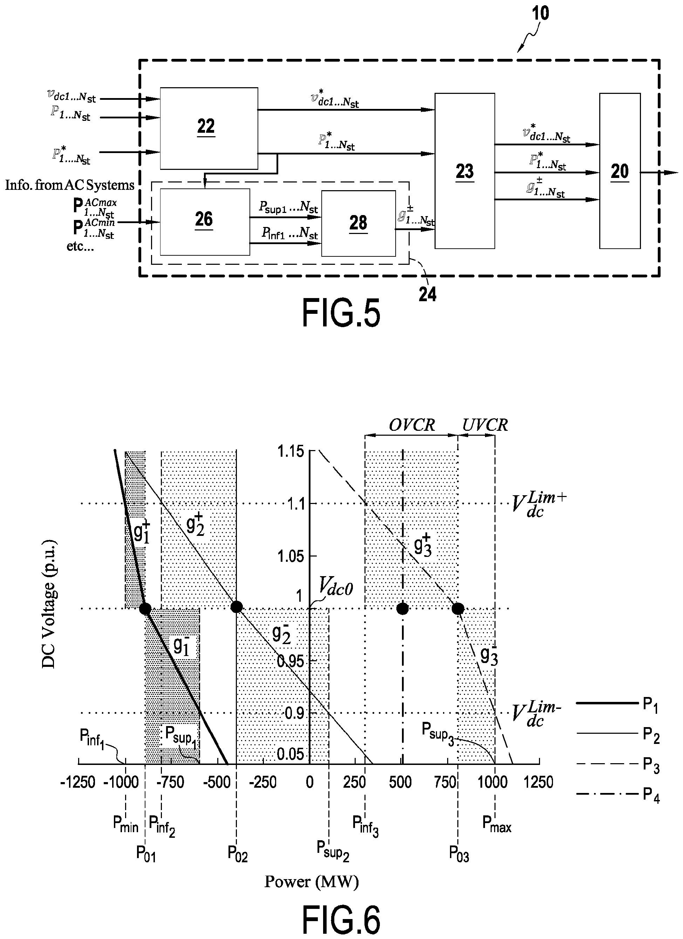

Un exemple de dispositif de contrôle **10** selon l'invention, pour contrôler les premier **100,** deuxième **200,** troisième **300** et quatrième terminaux de l'installation **14** est donné en figure **5.** Ce dispositif de contrôle **10** comprend un module de régulation **20,** un module de distribution de puissance **22,** un module de limitation **24** et un module de synchronisation **23.** Le module de limitation **24** comprend un module de gestion **26** et un calculateur **28.**

Dans cet exemple non limitatif, le module de régulation **20** est disposé de manière centralisée. En variante, le module de régulation **20** peut comporter une pluralité de sous-modules de régulation, chacun étant disposé localement à proximité d'un terminal qui lui est propre et dont il régule la puissance fournie ou prélevée sur la partie continue de l'installation.

Le module de distribution de puissance **22** reçoit en entrée des valeurs de tension mesurées $V_{dc1...Nst}$ sur la partie continue **16** de l'installation **14** ainsi que des valeurs mesurées $P_{1...Nst}$ et des consignes $P^*_{1...Nst}$ de puissances fournies ou prélevées par les terminaux de l'installation. Il délivre en sortie des consignes de puissances fournies ou prélevées $P^*_{1...Nst}$ par les terminaux ainsi que des consignes de tension $v^*_{dc1...Nst}$ de la partie continue. Le module de distribution de puissance 22 est configuré pour rétablir la puissance de l'installation suite à une perturbation. Le module de gestion **26** reçoit en entrée des valeurs de puissances maximales $P^{ACmax}_{1...Nst}$ et minimales $P^{ACmin}_{1...Nst}$ pouvant être fournies par les réseaux d'alimentation électrique alternatifs aux terminaux de l'installation **14,** ainsi que des consignes de puissances fournies ou prélevées $P^*_{1...Nst}$ par les terminaux, fournies par le module de distribution de puissance **22.**

Le module de gestion **26** du module de limitation **24** est configuré pour délivrer en sortie des limites de compensation en puissance supérieures $P_{sup1...Nst}$ et inférieures $P_{inf1...Nst}$ allouées à chacun des terminaux.

Le calculateur **28** reçoit en entrée les limites de compensation en puissance $P_{sup1...Nst}$ et $P_{inf1...Nst}$ délivrées par le module de gestion **26** et est configuré pour déterminer et délivrer en sortie des constantes de survoltage $g^+_{1...Nst}$ et des constantes de sous-voltage $g^-_{1...Nst}$ associées à chacun des terminaux.

Le module de synchronisation **23** reçoit en entrée les consignes de puissances fournies ou prélevées $P^*_{1...Nst}$ par les terminaux ainsi que les consignes de tension $v^*_{dc1...Nst}$ de la partie continue, délivrées par le module de distribution de puissance **22.** Ce module de synchronisation **23** assure la cohérence temporelle entre ces consignes.

Le module de régulation **20** reçoit en entrée les consignes de puissances fournies ou prélevées $P^*_{1...Nst}$ par les terminaux ainsi que les consignes de tension $v^*_{dc1...Nst}$ de la partie continue ainsi que les constantes de survoltage $g^+_{1...Nst}$ et de sous-voltage $g^-_{1...Nst}$ fournies par le module de synchronisation **23**.

Le module de régulation **20** fait varier la puissance fournie ou prélevée par les terminaux **100,200,300,400** de l'installation en fonction desdites consignes de puissances fournies ou prélevées, desdites consignes de tension ainsi que des constantes de survoltage et sous-voltage. Dans la variante où le module de régulation comprend une pluralité de sous-modules implantés localement à proximité des terminaux, chacun des sous-modules fait varier la puissance fournie ou prélevée par le terminal auquel il est associé, en fonction desdites consignes et constantes.

La figure **6** est un graphique illustrant l'évolution des puissances fournies et prélevées par les premier **100,** deuxième **200,** troisième **300** et quatrième **400** terminaux de l'installation de la figure **4,** en fonction de la variation de tension de la partie continue **16** de l'installation **14,** ces terminaux étant contrôlés par un dispositif de contrôle **10** selon l'invention.

On constate que, dans cet exemple, le quatrième terminal **400** fournit à la partie continue **16** de l'installation une puissance constante $P_4$ égale à 500MW. Les premier et deuxième terminaux **100, 200** fonctionnent en mode onduleur, de sorte qu'ils prélèvent une puissance sur la partie continue de l'installation. Dans cet exemple, la puissance prélevée $P_1$ par le premier terminal a une valeur initiale $P_{01}$ égale à -900MW tandis que a puissance prélevée $P_2$ par le deuxième terminal a une valeur initiale $P_{02}$ égale à-400MW. Le troisième terminal fonctionne lui en mode redresseur, de sorte qu'il fournit à la partie continue **16** une puissance $P_3$ ayant une valeur initiale $P_{03}$ égale à 800MW. Dans cet exemple non limitatif, la puissance nominale des terminaux est de 1000MW. Aussi, les puissances prélevées ou fournies $P_{1,2,3}$ par les premier, deuxième et troisième terminaux peuvent varier entre une limite de puissance supérieure $P_{max}$ égale à 1000 MW et une limite de puissance inférieure $P_{min}$ égale à -1000 MW.

La tension de la partie continue **16** de l'installation **14** est initialement de $V_{dc0}$, ce qui équivaut dans ce graphique à 1 unité de tension, pour des raisons de simplification. La variation de tension de la partie continue **16** est limitée par une limite de tension supérieure $V_{dc}^{lim+}$ et une limite de tension $V_{dc}^{lim-}$ inférieure. Dans l'exemple de la figure **6,** ces limites supérieures et inférieures de tension représentent une variation de 10% par rapport à la tension initiale $V_{dc0}$.

Les courbes $P_1$ et $P_2$ représentent respectivement l'évolution de la puissance prélevée par le premier terminal **100** et par le deuxième terminal **200** en réponse à une variation de tension sur la partie continue **16.** La courbe $P_3$ représente l'évolution de la puissance fournie par le troisième terminal **300** à la partie continue.

Dans un premier temps, le module de gestion **26** du module de limitation **24** détermine les limites de compensation en puissance supérieures $P_{sup1...Nst}$ et inférieures $P_{inf1...Nst}$ allouées à chacun des terminaux **100, 200, 300.** Ces limites définissent des plages de puissances supérieures UVCR et inférieures OVCR dans lesquelles peut varier la puissance fournie ou prélevée par chacun des terminaux. Les plages allouées par le module de limitation **24** à chacun des terminaux sont grisées sur la figure **6.** Les plages supérieure et inférieure du troisième terminal sont notées UVCR (Under Voltage Containment Reserve) et OVCR (Over Voltage Containment Reserve).

Dans cet exemple, la limite de compensation inférieure $P_{inf1}$ allouée au premier terminal **100** est fixée à -1000MW, de manière à correspondre à la limite de puissance inférieure $P_{min}$ des terminaux. La puissance $P_{01}$ initialement prélevée par le premier terminal **100** étant de -900MW, on comprend que le premier terminal peut prélever jusqu'à 100MW supplémentaires sur la partie continue **16** de l'installation **14.** La limite de compensation supérieure $P_{sup1}$ allouée au premier terminal est fixée à-600MW. La limite de compensation inférieure allouée $P_{inf2}$ au deuxième terminal **200** est fixée à -800MW et sa limite de compensation supérieure $P_{sup2}$ est fixée à 100MW. La limite de compensation inférieure $P_{inf3}$ allouée au troisième terminal **300** est fixée à 300MW. La limite de compensation supérieure $P_{sup3}$ allouée au troisième terminal **300** est fixée à 1000MW de manière à correspondre à la limite de puissance supérieure $P_{max}$ des terminaux. La puissance initiale $P_{03}$ fournie par le troisième terminal **300** étant de 800MW, on comprend que la puissance qu'il fournit à la partie continue peut augmenter de 200MW au maximum.

Le calculateur du module de limitation détermine alors des première gi, deuxième $g_2^+$ et troisièmes $g_3^+$ constantes de survoltage et les première $g_1^-$, deuxième $g_2^-$ et troisième $g_3^-$ constantes de sous-voltage associées respectivement aux premier **100,** deuxième **200** et troisième **300** terminaux. Ces constantes sont déterminées de manière à vérifier :

$$g_{1,2,3}^- = -\frac{P_{sup1,2,3} - P_{01,02,03}}{V_{dc}^{lim-} - V_{dc0}} = -\frac{UVCR_{1,2,3}}{V_{dc}^{lim-} - V_{dc0}}$$

et

$$g_{1,2,3}^{+} = - \frac{P_{01,02,03} - P_{inf1,2,3}}{V_{dc0} - V_{dc}^{lim+}} = \frac{OVCR_{1,2,3}}{V_{dc0} - V_{dc}^{lim+}}$$

Selon l'invention, le module de limitation **24** détermine une constante de sous-voltage $g_3^{-}$ du troisième terminal **300** inférieure à sa constante de survoltage $g_3^{+}$, dans la mesure où l'écart de puissance entre la puissance initiale $P_{03}$ du troisième terminal et la limite supérieure de puissance $P_{max}$ du troisième terminal 300 est faible, et plus particulièrement inférieure à une valeur déterminée, par exemple 300MW. De même, la constante de survoltage $g_1^{+}$ du premier terminal **100** est inférieure à sa constante de survoltage $g_1^{-}$, dans la mesure où l'écart de puissance entre la puissance initiale $P_{01}$ du premier terminal **100** et la limite inférieure de puissance $P_{inf}$ du premier terminal est faible, et plus particulièrement inférieure à une valeur déterminée, par exemple 300MW.

Le module de régulation **20** est alors configuré pour faire varier la puissance fournie ou prélevée par chacun des terminaux sur la partie continue de l'installation par application de la relation linéaire :

$$\Delta P_{1,2,3} = - {g_{1,2,3}}^{+} \Delta v_{dc} \text{ si } \Delta v_{dc} > 0$$

et

$$\Delta P_{1,2,3} = - {g_{1,2,3}}^{-} \Delta v_{dc} \text{ si } \Delta v_{dc} < 0$$

En réponse à une variation de tension positive ou négative sur la partie continue de l'installation, le module de régulation **20** fait donc varier linéairement la puissance fournie ou prélevée $P_{1,2,3}$ par chacun des terminaux **100,200,300** sur la partie continue **16,** les constantes de survoltage $g_{1,2,3}^{+}$ et de sous-voltage $g_{1,2,3}^{-}$ constituant les coefficients directeurs des droites de variation de puissance en fonction des variation de tension sur la partie continue.

Les constantes de survoltage $g_{1,2,3}^{+}$ et de sous-voltage $g_{1,2,3}^{-}$ sont déterminées de sorte que les puissances fournies ou prélevées $P_{1,2,3}$ par les terminaux atteignent les limites de compensation en puissance inférieures $P_{inf1,2,3}$ lorsque la tension de la partie continue atteint la limite de tension supérieure $V_{dc}^{lim+}$ et de sorte que les puissances fournies ou prélevées $P_{1,2,3}$ par les terminaux atteignent les limites de compensation en puissance supérieures $P_{sup1,2,3}$ lorsque la tension de la partie continue atteint la limite de tension inférieure $V_{dc}^{lim-}$. Les contraintes de fonctionnement des terminaux sont donc mieux respectées.

On constate que, grâce à l'invention, le troisième terminal **300,** dont la puissance initialement fournie $P_{03}$ à la partie continue **16** est proche de sa limite de puissance supérieure $P_{max}$, voit son augmentation de puissance fournie à la partie continue réduite, pour une baisse de tension donnée. La constante de sous-voltage $g_3^{-}$ qui lui est associée par le module de limitation **24** est faible. La contribution de ce troisième terminal **300** à la compensation de la baisse de tension est donc réduite.

De même, le premier terminal **100,** dont la puissance $P_{01}$ initialement fournie à la partie continue **16** est proche de sa limite de puissance inférieure $P_{min}$, voit son augmentation de puissance prélevée sur la partie continue réduite, pour une augmentation de tension donnée. La constante de survoltage $g_1^{+}$ qui lui est associée par le module de limitation **24** est faible. La contribution de ce premier terminal à la compensation de l'augmentation de tension est donc réduite.

Grâce à l'invention, la puissance fournie $P_3$ par le troisième terminal **300** atteint la limite de puissance supérieure

$P_{max}$ lorsque la limite inférieure de tension $V_{dc}^{lim-}$ est atteinte. De même, la puissance prélevée $P_1$ par le premier terminal **100** atteint la limite de puissance inférieure $P_{min}$ lorsque la limite supérieure de tension $V_{dc}^{lim+}$ est atteinte. Aussi, la tension de la partie continue **16** de l'installation **14** est maintenue entre les limites de tension supérieure et inférieure choisies.

Dans l'exemple de la figure **6,** le calculateur **28** du module de limitation **24** détermine les constantes de survoltage suivantes : gi = 1.563 MW/kV pour le premier terminal 100, $g_2^+ = 6.250$ MW/kV pour le deuxième terminal **200,** $g_3^+ = 7.813MW/kV$ pour le troisième terminal **300.** Le calculateur **28** du module de limitation **24** détermine également les constantes de sous-voltage suivantes : $g_1^- = 4.688$ MW/kV pour le premier terminal **100,** $g_2^- = 7.813$ MW/kV pour le deuxième terminal **200,** $g_3^- = 3.125MW/kV$ pour le troisième terminal **300.** Le module de limitation peut mettre en oeuvre un algorithme de calcul des constantes de survoltage et de sous-voltage.

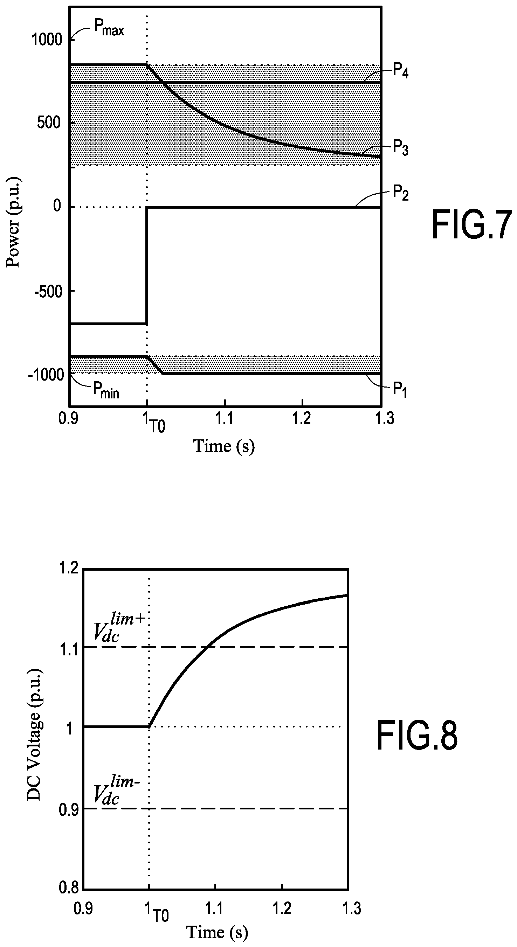

La figure **7** illustre les résultats de simulation de l'évolution de la puissance des terminaux **100,200,300,400** de l'installation **14** de la figure **1** contrôlés par un dispositif selon l'art antérieur. A l'instant $t_0$, on simule la panne du deuxième terminal **200** de l'installation **14,** qui ne prélève alors plus de puissance sur la partie continue **16** de l'installation. La puissance $P_2$ du deuxième terminal **200** devient nulle à l'instant $t_0$. On constate que la puissance $P_1$ du premier terminal **100** atteint très rapidement la limite de puissance inférieure $P_{min}$= -1000MW, et le premier terminal **100** entre en saturation. Le dispositif de contrôle selon l'art antérieur ne tient pas compte des limites de puissance supérieure $P_{max}$ et inférieure $P_{min}$ des terminaux de sorte que la variation de la puissance fournie ou prélevée par ces terminaux n'est pas adaptée à l'approche de ces limites de puissance. La puissance fournie ou prélevée par ces terminaux risque d'atteindre les limites de puissance supérieure $P_{max}$ et inférieure $P_{min}$ et devront alors être placé en saturation.

A partir du moment où le premier terminal **100** entre en saturation, la puissance $P_2$ qu'il prélève ne peut plus augmenter pour interrompre ou compenser l'augmentation de tension. Il ne peut plus contribuer à la compensation de variation de tension sur la partie continue **16** de l'installation **14.** Seul le troisième terminal **300** contribue dès lors à la compensation de variation de tension, ce qui n'est pas suffisant. La variation de tension n'est plus suffisamment compensée ce qui entraine une variation de tension d'autant plus grande. En conséquence, comme on le constate sur la figure **8,** la tension de la partie continue augmente jusqu'à dépasser la limite supérieure de tension $V_{dc}^{lim+}$.

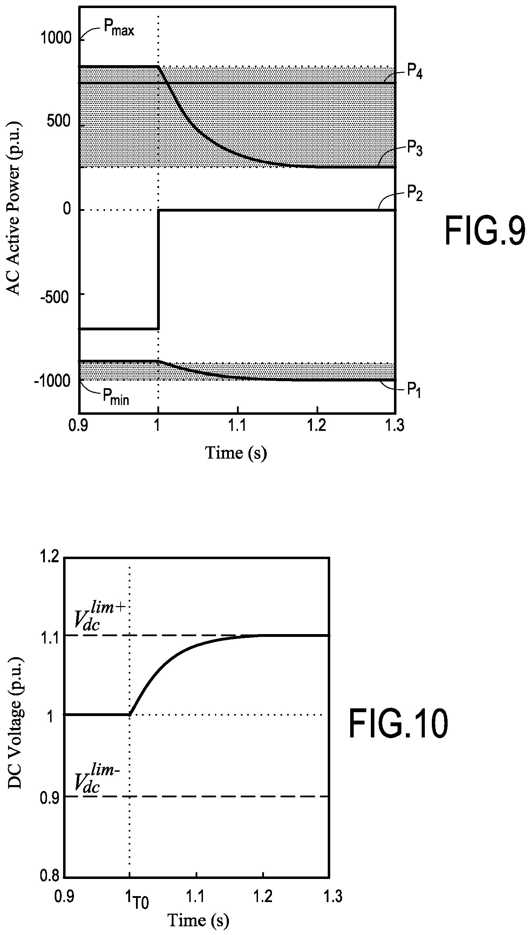

La figure **9** illustre les résultats de simulation de l'évolution de la puissance des terminaux **100,200,300,400** de l'installation **14** de la figure **5** contrôlés par un dispositif **10** selon l'invention. A l'instant $t_0$, on simule également la panne du deuxième terminal **200** de l'installation **14,** qui ne prélève alors plus de puissance sur la partie continue **16** de l'installation. La puissance $P_2$ du deuxième terminal **200** devient nulle à l'instant $t_0$. On constate que la puissance $P_1$ du premier terminal **100** atteint tend doucement vers la limite de puissance inférieure $P_{min}$= -1000MW, de manière asymptotique. Le dispositif de contrôle selon l'invention prend en compte les limites de puissance supérieure $P_{max}$ et inférieure $P_{min}$ des terminaux de sorte que la variation de la puissance fournie ou prélevée par ces terminaux est adaptée à l'approche de ces limites de puissance, de manière à éviter la mise en saturation des terminaux.

Comme constaté en figure **10,** la tension de la partie continue est maintenue en dessous de la limite supérieure de tension $V_{dc}^{lim+}$ et tend vers cette limite de manière asymptotique. Les terminaux ne sont pas surchargés, et n'entrent pas en saturation, quelle que soit la variation de tension. Le dispositif selon l'invention permet une meilleure distribution des puissances de compensation.

## Revendications

**1.** Dispositif de contrôle (10) d'un terminal (100,200,300) connecté dans une installation (14) de transport de courant continu haute tension multi-terminaux, le terminal étant connecté entre un premier réseau d'alimentation électrique alternatif (102,202,302) et une partie continue (16) de ladite installation, le terminal étant apte à fournir ou prélever une puissance sur la partie continue de l'installation comprise entre une limite de puissance supérieure et une limite de puissance inférieure, le dispositif comprenant en outre au moins un module de régulation (20) configuré pour faire varier la puissance fournie ou prélevée par le terminal sur la partie continue de l'installation, en fonction d'une variation de tension sur la partie continue de l'installation, le dispositif comprenant en outre un module de limitation (24) configuré pour limiter la variation de la puissance fournie ou prélevée par le terminal, pour une variation de tension donnée, lorsque l'écart de puissance entre la puissance fournie ou prélevée par ledit terminal et la limite de puissance supérieure ou la limite de puissance inférieure devient inférieur à une valeur déterminée, le module de limitation (24) étant configuré pour déterminer une constante de survoltage $g^+$ et une constante de sous-voltage $g^-$, différente de la constante de survoltage, associées au terminal (100,200,300), le module de régulation étant configuré pour faire varier la puissance fournie ou prélevée par le terminal sur la partie continue (16) de l'installation (14) par application de la relation linéaire :

$$\Delta P = -g^+ \Delta v_{dc} \text{ si } \Delta v_{dc} > 0 \text{ ;}$$

et

$$\Delta P = -g^- \Delta v_{dc} \text{ si } \Delta v_{dc} < 0$$

où $\Delta P$ est la variation de la puissance fournie ou prélevée par le terminal, induite par le module de régulation, $\Delta v_{dc}$ est la variation de tension sur la partie continue de l'installation (14), le module de limitation (24) comprenant un module de gestion (26) configuré pour allouer au terminal (100,200,300) une limite de compensation en puissance supérieure $P_{sup}$ et une limite de compensation en puissance inférieure $P_{inf}$ à partir de valeurs de puissance maximales et minimales fournies par le premier réseau d'alimentation électrique alternatif (102 ,202,302) et de consignes de puissances de fonctionnement du terminal, le module de limitation (24) comprenant en outre un calculateur (26) configuré pour déterminer la constante de sous-voltage $g^-$ et la constante de survoltage $g^+$ vérifiant les relations :

$$g^- = -\frac{P_{sup} - P_0}{V_{dc}^{lim-} - V_{dc0}} \text{ ;}$$

et

$$g^+ = -\frac{P_0 - P_{inf}}{V_{dc0} - V_{dc}^{lim+}}$$

où $V_{dc}^{lim-}$ est la limite inférieure de tension fixée de la partie continue (16) de l'installation (14), $V_{dc}^{lim+}$ est la limite supérieure de tension fixée de la partie continue (16) de l'installation, $V_{dc0}$ est la tension nominale de la partie continue de l'installation en l'absence de perturbation et $P_0$ est la puissance fournie ou prélevée par le terminal en l'absence de perturbation.

2.  Dispositif de contrôle selon la revendication 1, dans lequel le module de régulation (20) est configuré pour augmenter la puissance fournie ou diminuer la puissance prélevée par le terminal (100,200,300) sur la partie continue (16) de l'installation (14) en cas de baisse de tension sur la partie continue de l'installation.

3.  Dispositif de contrôle selon la revendication 2, dans lequel le module de limitation (24) est configuré pour limiter l'augmentation de la puissance fournie ou la diminution de puissance prélevée par le terminal (100,200,300) sur la partie continue (16) de l'installation (14), pour une baisse de tension donnée, lorsque l'écart de puissance entre ladite puissance fournie ou prélevée par le terminal et la limite de puissance supérieure est inférieur à la valeur déterminée.

4.  Dispositif de contrôle selon l'une quelconque des revendications 1 à 3, dans lequel le module de régulation est configuré pour diminuer la puissance fournie ou augmenter la puissance prélevée par le terminal (100,200,300) sur la partie continue (16) de l'installation (14) en cas d'augmentation de tension sur la partie continue de l'installation.

5.  Dispositif de contrôle selon la revendication 4, dans lequel le module de limitation (24) est configuré pour limiter la diminution de la puissance fournie ou l'augmentation de puissance prélevée par le terminal (100,200,300) sur la partie continue (16) de l'installation (14), pour une augmentation de tension donnée, lorsque l'écart de puissance entre ladite puissance fournie ou prélevée par le terminal et la limite de puissance inférieure devient inférieur à la valeur déterminée.

6. Dispositif de contrôle selon l'une quelconque des revendications 1 à 5, dans lequel le module de limitation (24) est configuré pour accroître la variation de la puissance fournie ou prélevée par le terminal (100,200,300) sur la partie continue (16) de l'installation (14), pour une variation de tension donnée, lorsque l'écart de puissance entre ladite puissance fournie ou prélevée par le terminal et la limite de puissance supérieure ou la limite de puissance inférieure devient supérieur à une valeur déterminée supplémentaire.

7. Dispositif de contrôle selon l'une quelconque des revendications 1 à 6, dans lequel le module de limitation (24) est configuré pour déterminer une constante de sous-voltage $g^-$ inférieure à la constante de survoltage $g^+$ lorsque l'écart de puissance entre la puissance fournie ou prélevée par le terminal (100,200,300) sur la partie continue (16) de l'installation (14) et la limite de puissance supérieure est inférieur à la valeur déterminée.

8. Dispositif de contrôle selon l'une quelconque des revendications 1 à 7, dans lequel le module de limitation (24) est configuré pour déterminer une constante de survoltage $g^+$ inférieure à la constante de sous-voltage $g^-$ lorsque l'écart de puissance entre la puissance fournie ou prélevée par le terminal (100,200,300) sur la partie continue (16) de l'installation (14) et la limite de puissance inférieure est inférieur à la valeur déterminée.

9. Dispositif de contrôle selon l'une quelconque des revendications 1 à 8, dans lequel l'installation (14) comprend une pluralité de terminaux (100,200,300) étant chacun connecté entre un réseau d'alimentation électrique alternatif et la partie continue (16) de ladite installation, chacun des terminaux étant apte à fournir ou prélever une puissance sur la partie continue de l'installation comprise entre une limite de puissance supérieure et une limite de puissance inférieure qui lui sont propres, le module de régulation (20) étant configuré pour faire varier la puissance fournie ou prélevée par chacun des terminaux sur la partie continue de l'installation de l'installation, en fonction d'une variation de tension sur la partie continue de l'installation, le module de limitation (24) étant configuré pour limiter la variation de la puissance fournie ou prélevée par chacun des terminaux, pour une variation de tension donnée, lorsque l'écart de puissance entre la puissance fournie ou prélevée par lesdits terminaux et la limite de puissance supérieure ou la limite de puissance inférieure qui leurs sont propres est inférieur à une valeur déterminée.

10. Installation (14) de transport de courant continu haute tension multi-terminaux (100,200,300), comprenant au moins un terminal connecté entre un premier réseau d'alimentation électrique alternatif et une partie continue (16) de ladite installation, le terminal étant apte à fournir ou prélever une puissance sur la partie continue de l'installation comprise entre une limite de puissance supérieure et une limite de puissance inférieure, l'installation comprenant un dispositif de contrôle du terminal selon l'une quelconque des revendications 1 à 9.

11. Procédé de contrôle d'un terminal connecté dans une installation (14) de transport de courant continu haute tension multi-terminaux, le terminal étant connecté entre un premier réseau d'alimentation électrique alternatif (102,202,302) et une partie continue (16) de ladite installation, le terminal étant apte à fournir ou prélever une puissance sur la partie continue de l'installation comprise entre une limite de puissance supérieure et une limite de puissance inférieure, le procédé comprenant une étape de variation de la puissance fournie ou prélevée par le terminal sur la partie continue de l'installation, en fonction d'une variation de tension sur la partie continue de l'installation, et une étape de limitation de la variation de la puissance fournie ou prélevée par le terminal, pour une variation de tension donnée, lorsque l'écart de puissance entre la puissance fournie ou prélevée par ledit terminal et la limite de puissance supérieure ou la limite de puissance inférieure devient inférieur à une valeur déterminée, l'étape de limitation comprenant la détermination d'une constante de survoltage $g^+$ et d'une constante de sous-voltage $g^-$, différente de la constante de survoltage, associées au terminal (100,200,300), dans lequel on fait varier la puissance fournie ou prélevée par le terminal sur la partie continue (16) de l'installation (14) par application de la relation linéaire :

$$\Delta P = -g^+ \Delta v_{dc} \text{ si } \Delta v_{dc} > 0 \text{ ; et}$$

et

$$\Delta P = -g^- \Delta v_{dc} \text{ si } \Delta v_{dc} < 0$$

où $\mathit{\Delta}P$ est la variation de la puissance fournie ou prélevée par le terminal, induite par le module de régulation, $\mathit{\Delta}v_{dc}$ est la variation de tension sur la partie continue de l'installation (14), l'étape de limitation comprenant l'allocation au terminal (100,200,300) d'une limite de compensation en puissance supérieure $P_{sup}$ et d'une limite de compensation en puissance inférieure $P_{inf}$ à partir de valeurs de puissance maximales et minimales fournies par le premier réseau d'alimentation électrique alternatif (102 ,202,302) et de consignes de puissances de fonctionnement du terminal, l'étape de limitation comprenant une étape de calcul de la constante de sous-voltage $g^-$ et de la constante de survoltage $g^+$ vérifiant les relations :

$$g^- = - \frac{P_{sup} - P_0}{V_{dc}^{lim-} - V_{dc0}} \; ;$$

et

$$g^+ = - \frac{P_0 - P_{inf}}{V_{dc0} - V_{dc}^{lim+}}$$

où $V_{dc}^{lim-}$ est la limite inférieure de tension fixée de la partie continue (16) de l'installation (14), $V_{dc}^{lim+}$ est la limite supérieure de tension fixée de la partie continue (16) de l'installation, $V_{dc0}$ est la tension nominale de la partie continue de l'installation en l'absence de perturbation et $P_0$ est la puissance fournie ou prélevée par le terminal en l'absence de perturbation.

**Patentansprüche**

1. Vorrichtung zur Steuerung (10) eines Endgeräts (100, 200, 300), das in einer Hochspannungs-Gleichstrom-Transportanlage (14) mit mehreren Endgeräten verbunden ist, wobei das Endgerät zwischen einem ersten Wechselstromversorgungsnetz (102, 202, 302) und einem Gleichstromteil (16) der Anlage verbunden ist, wobei das Endgerät in der Lage ist, auf dem Gleichstromteil der Anlage eine Leistung zwischen einer oberen Leistungsgrenze und einer unteren Leistungsgrenze zuzuführen oder zu entnehmen, wobei die Vorrichtung ferner mindestens ein Regelungsmodul (20) umfasst, das dazu ausgestaltet ist, die durch das Endgerät auf dem Gleichstromteil der Anlage zugeführte oder entnommene Leistung in Abhängigkeit von einer Spannungsvariation auf dem Gleichstromteil der Anlage zu variieren, wobei die Vorrichtung ferner ein Begrenzungsmodul (24) umfasst, das dazu ausgestaltet ist, die Variation der durch das Endgerät zugeführten oder entnommenen Leistung zu begrenzen, für eine gegebene Spannungsvariation, wenn die Leistungsabweichung zwischen der durch das Endgeräte zugeführten oder entnommenen Leistung und der oberen Leistungsgrenze oder der unteren Leistungsgrenze kleiner als ein vorbestimmter Wert wird, wobei das Begrenzungsmodul (24) dazu ausgestaltet ist, eine Überspannungskonstante $g^+$ und eine Unterspannungskonstante $g^-$, die sich von der Überspannungskonstante unterscheidet, die mit dem Endgerät (100, 200, 300) assoziiert sind, zu bestimmen, wobei das Regelungsmodul dazu ausgestaltet ist, die durch das Endgerät zugeführte oder entnommene Leistung auf dem Gleichstromteil (16) der Anlage (14) durch Anwendung der linearen Beziehung zu variieren:

$$\Delta P = -g^+ \Delta v_{dc} \; wenn \; \Delta v_{dc} > 0,$$

und

$$\Delta P = -g^- \Delta v_{dc} \; wenn \; \Delta v_{dc} < 0$$

wobei $\mathit{\Delta}P$ die Variation der durch das Endgerät zugeführten oder entnommenen Leistung ist, induziert durch das Regelungsmodul, $\mathit{\Delta}v_{dc}$ die Variation der Spannung auf dem Gleichstromteil der Anlage (14) ist, wobei das Begrenzungsmodul (24) ein Verwaltungsmodul (26) umfasst, das dazu ausgestaltet ist, dem Endgerät (100, 200, 300) eine Kompensationsgrenze der oberen Leistung $P_{sup}$ und eine Kompensationsgrenze der unteren Leistung $P_{int}$ ausgehend von Höchst- und Mindestleistungswerten, die durch das erste Wechselstromversorgungsnetz (102, 202, 302) zugeführt werden, und Betriebsleistungsvorgaben des Endgeräts zuzuweisen, wobei das Begrenzungsmodul (24) ferner einen Rechner (26) umfasst, der dazu ausgestaltet ist, die Unterspannungskonstante $g^-$ und die Überspannungskonstante $g^+$ unter Überprüfung der Beziehungen zu bestimmen:

$$g^- = -\frac{P_{sup}-P_0}{V_{dc}^{lim-}-V_{dc0}}$$

und

$$g^+ = -\frac{P_0 - P_{inf}}{V_{dc0} - V_{dc}^{lim+}}$$

wobei $V_{dc}^{lim-}$ die feste Spannungsuntergrenze des Gleichstromteils (16) der Anlage (14) ist, $V_{dc}^{lim+}$ die feste Spannungsobergrenze des Gleichstromteils (16) der Anlage ist, $V_{dc0}$ die Nennspannung des Gleichstromteils der Anlage in Abwesenheit von Störung ist und $P_0$ die durch das Endgerät zugeführte oder entnommene Leistung in Abwesenheit von Störung ist.

2. Vorrichtung zur Steuerung nach Anspruch 1, wobei das Regelungsmodul (20) dazu ausgestaltet ist, im Fall von Spannungsabfall auf dem Gleichstromteil der Anlage die durch das Endgerät (100, 200, 300) auf dem Gleichstromteil (16) der Anlage (14) zugeführte Leistung zu erhöhen oder entnommene Leistung zu verringern.

3. Vorrichtung zur Steuerung nach Anspruch 2, wobei das Begrenzungsmodul (24) dazu ausgestaltet ist, die Erhöhung der zugeführten Leistung oder die Verringerung der entnommenen Leistung durch das Endgerät (100, 200, 300) auf dem Gleichstromteil (16) der Anlage (14) für einen gegebenen Spannungsabfall zu begrenzen, wenn die Leistungsabweichung zwischen der durch das Endgerät zugeführten oder entnommenen Leistung und der oberen Leistungsgrenze kleiner als der vorbestimmte Wert ist.

4. Vorrichtung zur Steuerung nach einem der Ansprüche 1 bis 3, wobei das Regelungsmodul (20) dazu ausgestaltet ist, im Fall von Spannungserhöhung auf dem Gleichstromteil der Anlage die durch das Endgerät (100, 200, 300) auf dem Gleichstromteil (16) der Anlage (14) zugeführte Leistung zu verringern oder entnommene Leistung zu erhöhen.

5. Vorrichtung zur Steuerung nach Anspruch 4, wobei das Begrenzungsmodul (24) dazu ausgestaltet ist, die Verringerung der zugeführten Leistung oder Erhöhung der entnommenen Leistung durch das Endgerät (100, 200, 300) auf dem Gleichstromteil (16) der Anlage (14) zu begrenzen, für eine gegebene Spannungserhöhung, wenn die Leistungsabweichung zwischen der durch das Endgerät zugeführten oder entnommenen Leistung und der unteren Leistungsgrenze kleiner als der vorbestimmte Wert wird.

6. Vorrichtung zur Steuerung nach einem der Ansprüche 1 bis 5, wobei das Begrenzungsmodul (24) dazu ausgestaltet ist, die Variation der durch das Endgerät (100, 200, 300) auf dem Gleichstromteil (16) der Anlage (14) zugeführten oder entnommenen Leistung zu steigern, für eine gegebene Spannungsvariation, wenn die Leistungsabweichung zwischen der durch das Endgerät zugeführten oder entnommenen Leistung und der oberen Leistungsgrenze oder der unteren Leistungsgrenze größer als ein zusätzlicher bestimmter Wert wird.

7. Vorrichtung zur Steuerung nach einem der Ansprüche 1 bis 6, wobei das Begrenzungsmodul (24) dazu ausgestaltet ist, eine Unterspannungskonstante $g^-$ kleiner als die Überspannungskonstante $g^+$ zu bestimmen, wenn die Leistungsabweichung zwischen der durch das Endgerät (100, 200, 300) zugeführten oder entnommenen Leistung auf dem Gleichstromteil (16) der Anlage (14) und der oberen Leistungsgrenze kleiner als der bestimmte Wert ist.

8. Vorrichtung zur Steuerung nach einem der Ansprüche 1 bis 7, wobei das Begrenzungsmodul (24) dazu ausgestaltet ist, eine Überspannungskonstante $g^+$ kleiner als die Unterspannungskonstante $g^-$ zu bestimmen, wenn die Leistungsabweichung zwischen der durch das Endgerät (100, 200, 300) zugeführten oder entnommenen Leistung auf dem Gleichstromteil (16) der Anlage (14) und der unteren Leistungsgrenze kleiner als der bestimmte Wert ist.

9. Vorrichtung zur Steuerung nach einem der Ansprüche 1 bis 8, wobei die Anlage (14) mehrere Endgeräte (100, 200, 300) umfasst, die jeweils zwischen einem Wechselstromversorgungsnetz und dem Gleichstromteil (16) der Anlage verbunden sind, wobei jedes der Endgeräte geeignet ist, eine Leistung auf dem Gleichstromteil der Anlage zwischen einer oberen Leistungsgrenze und einer unteren Leistungsgrenze zuzuführen oder zu entnehmen, die ihm eigen sind, wobei das Regelungsmodul (20) dazu ausgestaltet ist, die durch jedes der Endgeräte auf dem Gleichstromteil der Anlage zugeführte oder entnommene Leistung der Anlage in Abhängigkeit von einer Spannungsvariation auf dem Gleichstromteil der Anlage zu variieren, wobei das Begrenzungsmodul (24) dazu ausgestaltet ist, die Variation der durch jedes der Endgeräte zugeführten oder entnommenen Leistung zu begrenzen, für eine gegebene Spannungsvariation, wenn die Leistungsabweichung zwischen der durch die Endgeräte zugeführten oder entnommenen Leistung und der oberen Leistungsgrenze oder der unteren Leistungsgrenze, die ihnen eigen sind, kleiner als ein bestimmter Wert ist.

10. Hochspannungs-Gleichstrom-Transportanlage (14) mit mehreren Endgeräten (100, 200, 300), umfassend mindestens ein Endgerät, das zwischen einem ersten Wechselstromversorgungsnetz und einem Gleichstromteil (16) der Anlage verbunden ist, wobei das Endgerät in der Lage ist, auf dem Gleichstromteil der Anlage eine Leistung zwischen einer oberen Leistungsgrenze und einer unteren Leistungsgrenze zuzuführen oder zu entnehmen, wobei die Anlage eine Vorrichtung zur Steuerung des Endgeräts nach einem der Ansprüche 1 bis 9 umfasst.

11. Verfahren zur Steuerung eines Endgeräts, das in einer Hochspannungs-Gleichstrom-Transportanlage (14) mit mehreren Endgeräten verbunden ist, wobei das Endgerät zwischen einem ersten Wechselstromversorgungsnetz (102, 202, 302) und einem Gleichstromteil (16) der Anlage verbunden ist, wobei das Endgerät in der Lage ist, auf dem Gleichstromteil der Anlage eine Leistung zwischen einer oberen Leistungsgrenze und einer unteren Leistungsgrenze zuzuführen oder zu entnehmen, wobei das Verfahren einen Schritt der Variation der durch das Endgerät auf dem Gleichstromteil der Anlage zugeführten oder entnommenen Leistung in Abhängigkeit einer Spannungsvariation auf dem Gleichstromteil der Anlage und einen Schritt der Begrenzung der Variation der durch das Endgerät zugeführten oder entnommenen Leistung, für eine gegebene Spannungsvariation, wenn die Leistungsabweichung zwischen der durch das Endgeräte zugeführten oder entnommenen Leistung und der oberen Leistungsgrenze oder der unteren Leistungsgrenze kleiner als ein vorbestimmter Wert wird, umfasst, wobei der Schritt der Begrenzung die Bestimmung einer Überspannungskonstante $g^+$ und einer Unterspannungskonstante $g^-$, die sich von der Überspannungskonstante unterscheidet, die mit dem Endgerät (100, 200, 300) assoziiert sind, umfasst, in dem die durch das Endgerät zugeführte oder entnommene Leistung auf dem Gleichstromteil (16) der Anlage (14) durch Anwendung der linearen Beziehung variiert wird:

$$\Delta P = -g^+ \Delta v_{dc} \; wenn \; \Delta v_{dc} > 0,$$

und

$$\Delta P = -g^- \Delta v_{dc} \; wenn \; \Delta v_{dc} < 0$$

wobei $\Delta P$ die Variation der durch das Endgerät zugeführten oder entnommenen Leistung ist, induziert durch das Regelungsmodul, $\Delta v_{dc}$ die Variation der Spannung auf dem Gleichstromteil der Anlage (14) ist, wobei der Schritt der Begrenzung die Zuweisung einer Kompensationsgrenze der oberen Leistung $P_{sup}$ und einer Kompensationsgrenze der unteren Leistung $P_{int}$ ausgehend von Höchst- und Mindestleistungswerten, die durch das erste Wechselstromversorgungsnetz (102, 202, 302) zugeführt werden, und Betriebsleistungsvorgaben des Endgeräts an das Endgerät (100, 200, 300) umfasst, wobei der Schritt der Begrenzung einen Schritt der Berechnung der Unterspannungskonstante $g^-$ und der Überspannungskonstante $g^+$ unter Überprüfung der Beziehungen umfasst:

$$g^- = -\frac{P_{sup} - P_0}{V_{dc}^{lim-} - V_{dc0}}$$

und

$$g^+ = -\frac{P_0 - P_{inf}}{V_{dc0} - V_{dc}^{lim+}}$$

wobei $V_{dc}^{lim-}$ die feste Spannungsuntergrenze des Gleichstromteils (16) der Anlage (14) ist, $V_{dc}^{lim+}$ die feste Spannungsobergrenze des Gleichstromteils (16) der Anlage ist, $V_{dc0}$ die Nennspannung des Gleichstromteils der Anlage in Abwesenheit von Störung ist und $P_0$ die durch das Endgerät zugeführte oder entnommene Leistung in Abwesenheit von Störung ist.

**Claims**

1. A control device for controlling (10) a terminal (100, 200, 300) connected in a multi-terminal high-voltage direct current transmission facility (14), the terminal being connected between a first AC power supply network (102, 202, 302) and a DC part (16) of said facility, the terminal being able to provide or draw power on the DC part of the facility comprised between an upper power limit and a lower power limit, the device further comprising at least one regulation module (20) configured to vary the power provided or drawn by the terminal on the DC part of the facility, as a function of a voltage variation on the DC part of the facility, the device further comprising a limitation module (24) configured to limit the variation of the power provided or drawn by the terminal, for a given voltage variation, when the power difference between the power provided or drawn by said terminal and the upper power limit or the lower power limit becomes smaller than a determined value, the limitation module (24) being configured to determine an overvoltage constant $g^+$ and an under-voltage constant $g^-$, different from the overvoltage constant, associated with the terminal (100, 200, 300), the regulation module being configured to vary the power provided or drawn by the terminal on the DC part (16) of the facility (14) by application of the linear relation:

$$\Delta P = -g^+ \Delta v_{dc} \text{ if } \Delta v_{dc} > 0 \text{ ;}$$

and

$$\Delta P = -g^- \Delta v_{dc} \text{ if } \Delta v_{dc} < 0$$

where $\Delta P$ is the variation of the power provided or drawn by the terminal, induced by the regulation module, $\Delta v_{dc}$ is the voltage variation on the DC part of the facility (14), the limitation module (24) comprising a management module (26) configured to allocate to the terminal (100, 200, 300) an upper power compensation limit $P_{sup}$ and a lower power compensation limit $P_{inf}$ from maximum and minimum power values provided by the first AC power supply network (102, 202, 302) and from operating power setpoints of the terminal, the limitation module (24) further comprising a calculator (26) configured to determine the under-voltage constant $g^-$ and the overvoltage constant $g^+$ verifying the relation:

$$g^- = - \frac{P_{sup} - P_0}{V_{dc}^{lim-} - V_{dc0}} \text{ ;}$$

and

$$g^+ = - \frac{P_0 - P_{inf}}{V_{dc0} - V_{dc}^{lim+}}$$

where $V_{dc}^{lim-}$ is the set lower voltage limit of the DC part (16) of the facility (14), $V_{dc}^{lim+}$ is the set upper voltage limit of the DC part (16) of the facility, $V_{dc0}$ is the nominal voltage of the DC part of the facility in the absence of disturbance and $P_0$ is the power provided or drawn by the terminal in the absence of disturbance.

2. The control device according to claim 1, wherein the regulation module (20) is configured to increase the power provided or decrease the power drawn by the terminal (100, 200, 300) on the DC part (16) of the facility (14) in the event of a voltage drop on the DC part of the facility.

3. The control device according to claim 2, wherein the limitation module (24) is configured to limit the increase in the power provided or the decrease in the power drawn by the terminal (100, 200, 300) on the DC part (16) of the facility (14), for a given voltage drop, when the power difference between said power provided or drawn by the terminal and the upper power limit is smaller than the determined value.

4. The control device according to any one of claims 1 to 3, wherein the regulation module is configured to decrease the power provided or increase the power drawn by the terminal (100, 200, 300) on the DC part (16) of the facility (14) in the event of a voltage increase on the DC part of the facility.

5. The control device according to claim 4, wherein the limitation module (24) is configured to limit the decrease of the power provided or the increase of the power drawn by the terminal (100, 200, 300) on the DC part (16) of the facility (14), for a given voltage increase, when the power difference between said power provided or drawn by the terminal and the lower power limit becomes smaller than the determined value.

6. The control device according to any one of claims 1 to 5, wherein the limitation module (24) is configured to increase the variation of the power provided or drawn by the terminal (100, 200, 300) on the DC part (16) of the facility (14), for a given voltage variation, when the power difference between said power provided or drawn by the terminal and the upper power limit or the lower power limit becomes greater than an additional determined value.

7. The control device according to any one of claims 1 to 6, wherein the limitation module (24) is configured to determine an under-voltage constant $g^-$ smaller than the overvoltage constant $g^+$ when the power difference between the power provided or drawn by the terminal (100, 200, 300) on the DC part (16) of the facility (14) and the upper power limit is smaller than the determined value.

8. The control device according to any one of claims 1 to 7, wherein the limitation module (24) is configured to determine an overvoltage constant $g^+$ smaller than the under-voltage constant $g^-$ when the power difference between the power provided or drawn by the terminal (100, 200, 300) on the DC part (16) of the facility (14) and the lower power limit is smaller than the determined value.

9. The control device according to any one of claims 1 to 8, wherein the facility (14) comprises a plurality of terminals (100, 200, 300) each being connected between an AC power supply network and the DC part (16) of said facility, each of the terminals being able to provide or draw power on the DC part of the facility comprised between an upper power limit and a lower power limit that are specific thereto, the regulation module (20) being configured to vary the power provided or drawn by each of the terminals on the DC part of the facility, as a function of a voltage variation on the DC part of the facility, the limitation module (24) being configured to limit the variation of the power provided or drawn by each of the terminals, for a given voltage variation, when the power difference between the power provided or drawn by said terminals and the upper power limit or the lower power limit that are specific thereto is smaller than a determined value.

10. A multi-terminal high-voltage direct current transmission (100, 200, 300) facility (14), comprising at least one terminal connected between a first AC power supply network and a DC part (16) of said facility, the terminal being able to provide or draw power on the DC part of the facility comprised between an upper power limit and a lower power limit, the facility comprising a control device for controlling the terminal according to any one of claims 1 to 9.

11. A method for controlling a terminal connected in a multi-terminal high-voltage direct current transmission facility (14), the terminal being connected between a first AC power supply network (102, 202, 302) and a DC part (16) of said facility, the terminal being able to provide or draw power on the DC part of the facility comprised between an upper power limit and a lower power limit, the method comprising a step of varying the power provided or drawn by the terminal on the DC part of the facility, as a function of a voltage variation on the DC part of the facility, and a limitation step wherein the variation of the power provided or drawn by the terminal is limited, for a given voltage variation, when the power difference between the power provided or drawn by said terminal and the upper power limit or the lower power limit becomes smaller than a determined value, the limitation step comprising determining an overvoltage constant $g^+$ and an under-voltage constant $g^-$, different from the overvoltage constant, associated with the terminal (100, 200, 300), wherein the power provided or drawn by the terminal on the DC part (16) of the facility (14) is varied by application of the linear relation:

$$\Delta P = -g^+ \Delta v_{dc} \text{ if } \Delta v_{dc} > 0 \text{ ;}$$

and

$$\Delta P = -g^- \Delta v_{dc} \text{ if } \Delta v_{dc} < 0$$

where $\Delta P$ is the variation of the power provided or drawn by the terminal, induced by the regulation module, $\Delta v_{dc}$ is the voltage variation on the DC part of the facility (14), the limitation step comprising allocating to the terminal (100, 200, 300) an upper power compensation limit $P_{sup}$ and a lower power compensation limit $P_{inf}$ from maximum and minimum power values provided by the first AC power supply network (102, 202, 302) and from operating power setpoints of the terminal, the limitation step further comprising a step of calculating the under-voltage constant $g^-$ and the overvoltage constant $g^+$ verifying the relation:

$$g^- = -\frac{P_{sup}-P_0}{V_{dc}^{lim-}-V_{dc0}} \; ;$$

and

$$g^+ = -\frac{P_0 - P_{inf}}{V_{dc0} - V_{dc}^{lim+}}$$

where $V_{dc}^{lim-}$ is the set lower voltage limit of the DC part (16) of the facility (14), $V_{dc}^{lim+}$ is the set upper voltage limit of the DC part (16) of the facility, $V_{dc0}$ is the nominal voltage of the DC part of the facility in the absence of disturbance and $P_0$ is the power provided or drawn by the terminal in the absence of disturbance.

FIG.1
ART ANTERIEUR

FIG.2
ART ANTERIEUR

FIG.3
ART ANTERIEUR

FIG.4

FIG.5

FIG.6

FIG.7

FIG.8

FIG.9

FIG.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 105281356 A
- CN 104821595 A
- US 2013285460 A1
- GB 2537684 A
- WO 2012000548 A1